# EUROPEAN PATENT APPLICATION

(11) **EP 1 249 956 A2**
(43) Date of publication of application: **16.10.2002**
(21) Application number: 01113413.7
(22) Date of filing: 01.06.2001
(51) Int. Cl.: H04J 14/02, H04B 10/17

(54) **In-line hub amplifier structure**

(30) Priority: 12.04.2001 US 834984
(71) Applicant: Redfern Broadband Networks Inc., Wilmington, County of Newcastle, Delaware, 19801 (US)
(72) Inventor: Morgan, Trefor, Carlton, Victoria 3053 (AU); Lauder, Richard, New South Wales 2035 (AU); Bryce, Jennifer, Potts Point, New South Wales 2011 (AU)
(74) Representative: Kuhnen & Wacker

(57) **Abstract**

An optical network hub structure comprising a WDM unit arranged in line with a fibre trunk carrying a bi-directional optical network signal to drop/add blocks of wavelengths destined to/originating from the network hub structure and to through connect other blocks of wavelengths, and at least one amplifier structure disposed in line on the fibre trunk at each side of the WDM unit, each amplifier structure comprising at least two propagation dependent optical junction elements, at least two optical paths optically connected in parallel between the two junction elements, and a first amplifier in only one of the optical paths, whereby a bi-directional, multiplexed optical signal comprising different blocks of wavelengths, each block of wavelengths having a specified propagation direction with respect to the amplifier structure, is, in use, uni-directionally amplified, whereby at each side of the WDM unit the optical network signal is, in use, uni-directionally amplified.

## Description

### Field of the invention

The present invention relates broadly to an amplifier structure for uni-directionally amplifying a bi-directional, multiplexed optical signal comprising different blocks of wavelengths, each block of wavelengths having a specified propagation direction with respect to the amplifier structure.

### Background of the invention

In bi-directional optical networks comprising a ring structure with a plurality of network hubs, in-line amplifier structures are typically provided in the field at different points along the ring structure to compensate for losses experienced. Those in-line amplifier structures are configured in a way such that they bi-directionally amplify the bi-directional optical signal carried in the optical network. In other words, amplification is provided for both propagation directions within the in-line amplifier structure.

Depending on the transmission distances between neighbouring network hubs, more than one in-line amplifier structure may have to be provided between neighbouring network hubs.

In at least preferred embodiments, the present invention seeks to provide an in-line optical amplifier structure which can be used at the network hubs. This can have the advantage of reducing the number of in-line amplifier structures having to be provided in the field between the network hubs, thereby reducing maintenance issues associated with in field amplifier structures. Further, this may also reduce the total number of amplifiers required in each hub, and in the network overall, resulting in considerable cost savings in deploying and operating the optical network.

### Summary of the invention

In accordance with a first aspect of the present invention there is provided an optical network hub structure comprising a WDM unit arranged, in use, in line with a fibre trunk of an optical network carrying a bi-directional optical network signal to drop/add blocks of wavelengths destined to/originating from the network hub structure and to through-connect other blocks of wavelengths, and at least one amplifier structure disposed in line on the fibre trunk at each side of the WDM unit, each amplifier structure comprising at least two propagation direction dependent optical junction elements, at least two optical paths optically connected in parallel between the two junction elements, and a first amplifier in only one of the optical paths, whereby a bi-directional, multiplexed optical signal comprising different blocks of wavelengths, each block of wavelengths having a specified propagation direction with respect to the amplifier structure, is, in use, uni-directionally amplified, whereby at each side of the WDM unit the optical network signal is, in use, uni-directionally amplified.

Each amplifier structure may further comprise a filter element in each of the optical paths, each filter element arranged, in use, to transmit only the blocks of wavelengths having the propagation direction with respect to the amplifier structure intended for transmission in the respective optical path.

Preferably, the filter element in the one optical path in which the amplifier is located is arranged at the input of the amplifier.

Each amplifier structure may further comprise a second amplifier operating in a different wavelength band than the first amplifier and optically connected in parallel with the first amplifier in one of the optical paths by way of a band splitter and a band coupler, whereby the amplifier structure can be used to uni-directionally amplify the bi-directional, multiplexed signal in different wavelengths bands. Two filter elements may be provided in the one optical path, one at the input of each of the first and second amplifiers.

Each optical path may further comprise optical isolator means. The isolator means on one optical path may comprise a first isolator and a second isolator disposed at the input and the output of the first amplifier. Where the first and second amplifiers are present in the optical paths, the isolator means in that optical path may comprise two pairs of first and second isolators.

The filter elements may comprise band reflect filters.

The optical junction element may comprise an optical circulator. The optical circulator preferably is a blocking optical circulator.

In an alternative embodiment, the optical junction element comprises a WDM multiplexer/demultiplexer unit. In such an embodiment, the functionality of the filter elements is effected by the WDM unit. the WDM unit may comprise a dense WDM unit.

Preferably, each amplifier structure is arranged in a manner such that the optical network signal is, in use, uni-directionally amplified in a direction towards the network hub structure.

In accordance with a second aspect of the present invention there is provided an in-line optical amplifier structure, the amplifier structure comprising at least two propagation dependent optical junction elements, at least two optical paths optically connected in parallel between the two junction elements, and a first amplifier in only one of the optical paths, whereby a bi-directional, multiplexed optical signal comprising different blocks of wavelengths, each block of wavelengths having a specified propagation direction with respect to the amplifier structure, is, in use, uni-directionally amplified.

### Brief description of the drawings

Preferred forms of the present invention will now be described, by way of example only, with reference to the accompanying drawings.

Figure 1 is a schematic drawing illustrating an optical network embodying the present invention.

Figure 2 is a schematic drawing illustrating an optical network hub of the optical network shown in figure 1.

Figure 3 is a schematic drawing illustrating an optical network hub embodying the present invention.

Figure 4 is a schematic drawing of an in-line optical amplifier structure embodying the present invention.

### Detailed description of the embodiments

The preferred embodiments described provide an optical network hub structure in which provision of two in-line amplifier structures located at the network hub can replace one in-line amplifier between the network hub and each of its neighbouring network hubs, and two receiver pre-amplifiers internal to the hub. That is, two amplifiers embodying the present invention can replace up to six amplifiers deployed according to a prior art configuration.

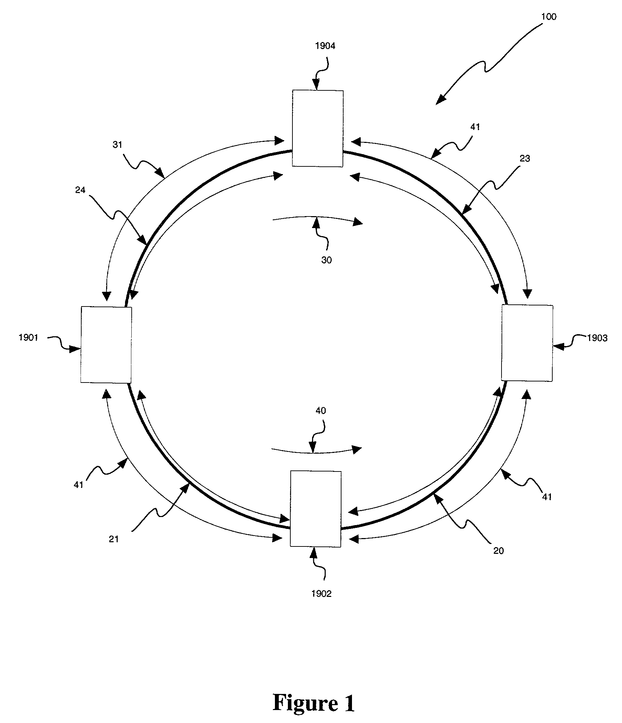

A bi-directional optical network 100 with a ring architecture ("the network") is shown in Figure 1. The network 10 comprises a number of network hubs 1901, 1902, 1903, and 1904 located at different physical locations on the network 100. The network hubs 1901, 1902, 1903, and 1904 are linked by optical fibre trunks e.g., 20. The fibre trunks e.g., 20 can carry network traffic in two directions - in a clockwise manner 30 around the network 100 and in an anticlockwise manner 40 around the network.

Suppose, for example, hub 1901 is sending information to hub 1904. In Figure 1, the shortest optical path from node 1901 to 1904 is via the fibre trunk 24. Thus the fibre trunk 24 is chosen as the primary path 31. If there is a break in the fibre trunk 24, then a secondary path 41 is followed from hubs 1901 to 1904 through the fibre trunks 21, 22 and 23 respectively. Thus, if there a failure in the network along the primary path 31, the information from hub 1901 can still reach hub 1904 via the secondary path 41 along the network 100.

An optical signal travelling along the optical fibre trunks 21, 22, 23 and 24 within the network 100 is attenuated due to processes including scattering, absorption, connector losses, and insertion losses of optical components comprising the network 100. As such optical amplifiers are crucial elements of optical networks to amplify the attenuated signals within the network 100.

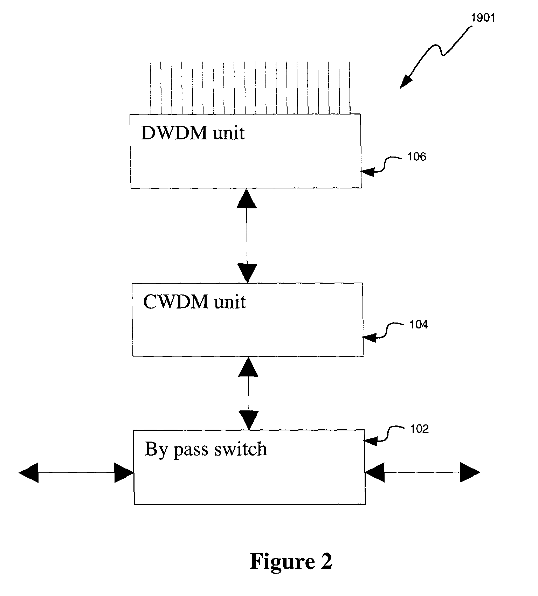

Figure 2 shows the main functional components of one of the network hubs 1901. The components are:
- a hub bypass switch 102;
- a coarse WDM unit 104, and
- a dense WDM unit 106.

The bypass switch 102 in a normal state, through-connects incoming and outgoing traffic from either side of the bypass switch 102 into the coarse WDM unit 104. In a bypass state, all traffic is directly through-connected from one side of the bypass switch 102 to the other, effectively isolating the network hub 1901 from the optical network.

In the coarse WDM unit 104, selected blocks of wavelengths intended for/originating from the network 1901 are dropped/added from and to the optical network signal. All other blocks of wavelengths are "returned" to the bypass switch 102, i.e., express traffic is through-connected without being added or dropped at the network hub 1901.

In the dense WDM 106, the respective added/dropped blocks of wavelengths are further multiplexed/de-multiplexed into respective wavelength signals to and from subscribers (not shown).

In the following, a hub structure embodying the present invention will be described for use in an optical network of the type described above with reference to figure 1.

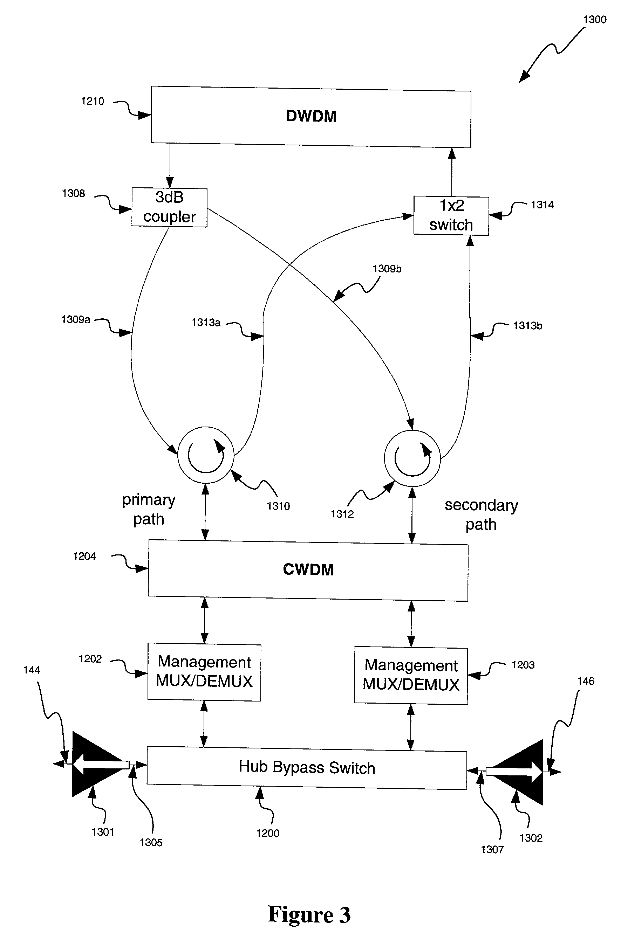

Figure 3 shows a preferred embodiment of a hub 1300. Optical signals transmitted from subscribers (not shown) via the DWDM MUX/DEMUX Unit 1210 are passed to a first port of the 3 dB coupler 1308. Half of the power is output from a second port of the 3 dB coupler 1308 to a first output path 1309*a*, and half of the power is output from a third port of the 3 dB coupler 1308 to a second output path 1309*b*.

The signals on path 1309a, comprising the Primary Tx Path, are output from a second port of the optical circulator 1310 to the upper left-hand port of the Bi-directional CWDM 1204, from which they are sent onto the primary path 144 of the network via the Hub Bypass Switch 1200.

Signals on the second path 1309*b* output from the 3 dB coupler 1308 are passed to a first port of an optical circulator 1312. These signals, comprising the Secondary Tx Path, are output from a second port of the optical circulator 1312 to the upper right-hand port of the Bi-directional CWDM 1204, from which they are sent onto the secondary path 146 of the network via the Hub Bypass Switch 1200.

Optical signals received from the primary path 144 via the Hub Bypass Switch 1200 are output from the upper left-hand port of the Bi-directional CWDM 1204 to the second port of the optical circulator 1310. These signals are output from a third port of the optical circulator 1310 and passed via a first path 1313*a* to a first port of the 1x2 switch 1314, and output from a second port of the 1x2 switch 1314 to the DWDM MUX/DEMUX Unit 1210.

Optical signals received from the secondary path 146 via the Hub Bypass Switch 1200 are output from the upper right-hand port of the Bi-directional CWDM 1204 to the second port of the optical circulator 1312. These signals are output from a third port of the optical circulator 1312 and passed via a second path 1313*b* to a third port of the 1x2 switch 1314, and output from the second port of the 1x2 switch 1314 to the DWDM MUX/DEMUX Unit 1210.

The 1x2 switch 1314 is configured in use so that only the signals on one of the two paths 1313*a*, 1313*b* are received via the DWDM Unit 1210. The signals which are to be received may be determined either as the path providing the best quality signal in the case of a dual homing configuration, or by fixed-alternate routing in the case of a dual transmission configuration.

A suitable method is required to effect protection switching using the optical switch 1314. In a preferred embodiment, the method comprises the following exemplary steps:
- assuming that initially the active path is the primary path 144, a failure of the primary path 144 (e.g. a fibre cut) is detected by the occurrence of a "no signal" condition at the receivers (not shown) following the DWDM Unit 1210;;
- the switch 1314 is reconfigured to select the signals received from the secondary path 146;
- the failure of the primary path 144 is communicated to other network elements via management channels provided by a Management MUX/DEMUX Units 1202, 1203 of the network hub;
- appropriate action is taken by the network elements adjacent to the cut (e.g. shutting down of inline amplifiers) to prevent the emission of hazardous levels of optical radiation at the location of the fibre cut.

Note that signals propagate bi-directionally on each of the trunk fibres 1305, 1307, and that one direction around the ring corresponds to the primary path, and the other to the secondary path to provide protection (compare Figure 1). Therefore, in a minimal configuration, only one transmission fibre is required between each pair of adjacent hubs. The network is therefore able to provide bi-directional transmission and protection on a ring comprising single fibre connections.

Advantageously, as shown in the embodiment in Figure 3, the bi-directional uni-amplification amplifiers 1301, 1302 act as pre-amplifiers for the incoming hub traffic, and as line amplifiers for the express traffic that bypasses the hub. Note that the bi-directional uni-amplification amplifiers 1301, 1302 function as line amplifiers for express traffic even if the Hub Bypass Switch 1200 is closed, isolating the hub from the network. The benefits of the configuration 1300 may be summarised as follows:
- Advantageously, it may be possible to co-locate some or all in-line amplifiers at hubs, obviating the need to install line amplifiers in the field.
- Express signals entering the hub 1300 from a trunk fibre e.g. 1305 are amplified by the in-line pre-amplifier e.g. 1301 immediately prior to entering the hub bypass switch 1200 and CWDM Unit 1204. Since these components introduce some insertion loss, the overall degradation in the optical signal-to-noise ratio is reduced in the configuration 1300 compared with alternative configurations, such as the use of in-line amplifiers located away from the hub, and/or the use of amplifiers within the hub.
- Advantageously, the bi-directional uni-amplification amplifiers 1301, 1302 replace pre-amplifiers which may otherwise be required within the hubs for amplification of signals received at the hubs, while also performing the function of line amplification for express traffic. Hence the number of amplifiers in the network may be reduced. In particular, in some cases the in-line hub amplifiers 1301, 1302 may replace two adjacent in-line amplifiers, two post-amplifiers within the hub, and two pre-amplifers within the hub, i.e. up to six amplifiers may be replaced by only two amplifiers.

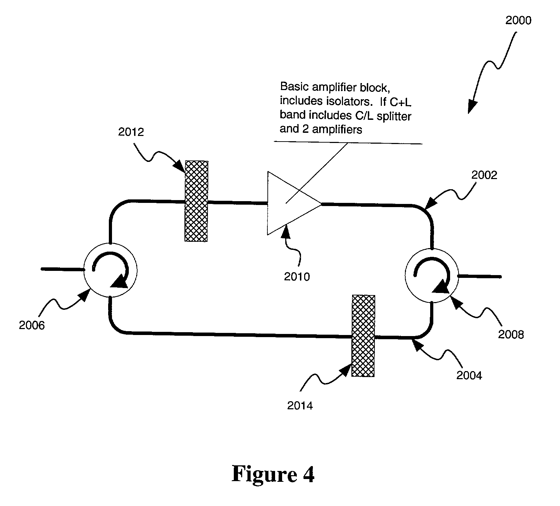

The structure 2000 of the bi-directional uni-amplification amplifiers 1301, 1302 is shown in Figure 4. In the structure 2000, there are provided 2 optical paths 2002, 2004 between different ports of 2 circulators 2006, 2008. Only one of the optical paths, 2002, comprises an amplifier 2010, while both optical paths 2002, 2004 comprise filters 2012, 2014 to prevent parasitic lasing of the amplifier structure 2000. The amplifier 2010 may comprise input and output optical isolators. The amplifier 2010 may further comprise a single C-band amplifier, a single L-band amplifier or dual C+L band amplifiers, C/L band splitter and combiner and associated filters.

Advantageously, since the structure 2000 comprises gain in only one direction, the possibility of parasitic lasing occurring may be very remote compared to a bi-directional amplifying structure in which both directions of propagation comprise gain elements. Consequently, it may be possible to eliminate the wavelength-dependent elements (such as the optical filters 2012, 2014) altogether. In this case, the bi-directional uni-amplification amplifiers are independent of the direction of propagation of each wavelength within the network, thus allowing greater flexibility in the configuration of the network 100.

It will be appreciated by the person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

In the claims that follow and in the summary of the invention, except where the context requires otherwise due to express language or a necessary implication, the word "comprising" is used in the sense of "including", i.e. the features specified may be associated with further features in various embodiments of the invention.

## Claims

1. An optical network hub structure comprising:
- a WDM unit arranged in line with a fibre trunk carrying a bi-directional optical network signal to drop/add blocks of wavelengths destined to/originating from the network hub structure and to through connect other blocks of wavelengths, and
- at least one amplifier structure disposed in line on the fibre trunk at each side of the WDM unit, each amplifier structure comprising:
- at least two propagation dependent optical junction elements,
- at least two optical paths optically connected in parallel between the two junction elements, and
- a first amplifier in only one of the optical paths,
whereby a bi-directional, multiplexed optical signal comprising different blocks of wavelengths, each block of wavelengths having a specified propagation direction with respect to the amplifier structure, is, in use, uni-directionally amplified,
whereby at each side of the WDM unit the optical network signal is, in use, uni-directionally amplified.

2. A hub structure as claimed in claim 1, wherein each amplifier structure further comprises a filter element in each of the optical paths, each filter element arranged, in use, to transmit only the blocks of wavelengths having the propagation direction with respect to the amplifier structure intended for transmission in the respective optical path.

3. A hub structure as claimed in claim 1, wherein the filter element in the one optical path in which the amplifier is located is arranged at the input of the amplifier.

4. A hub structure as claimed in claim 1, wherein each amplifier structure further comprises a second amplifier operating in a different wavelength band than the first amplifier and optically connected in parallel with the first amplifier in the one optical path by way of a band splitter and a band coupler, whereby each amplifier structure can be used to uni-directionally amplify the bi-directional, multiplexed signal in different wavelengths bands.

5. A hub structure as claimed in claim 4, wherein two filter elements are provided in the one optical path, one at the input of each of the first and second amplifiers.

6. A hub structure as claimed in claim 1, wherein each optical path further comprises optical isolator means.

7. A hub structure as claimed in claim 2, wherein the filter elements comprise band reflect filters.

8. A hub structure as claimed in claim 1, wherein the optical junction element comprises an optical circulator.

9. A hub structure as claimed in claim 8, wherein the optical circulator is a blocking optical circulator.

10. A hub structure as claimed in claim 1, wherein the optical junction element comprises a WDM multiplexer/demultiplexer unit.

11. A hub structure as claimed in claim 1, wherein each amplifier structure is arranged in a manner such that the optical network signal is, in use, uni-directionally amplified in a direction towards the network hub structure.

12. An in-line optical amplifier structure, the amplifier structure comprising:
- at least two propagation dependent optical junction elements,
- at least two optical paths optically connected in parallel between the two junction elements, and
- a first amplifier in only one of the optical paths,
whereby a bi-directional, multiplexed optical signal comprising different blocks of wavelengths, each block of wavelengths having a specified propagation direction with respect to the amplifier structure, is, in use, uni-directionally amplified.
